# EUROPEAN PATENT SPECIFICATION

(11) **EP 1 901 202 B1**
(45) Date of publication and mention of the grant of the patent: **30.09.2009**
(21) Application number: 07113284.9
(22) Date of filing: 26.07.2007
(51) Int. Cl.: G06K 7/00, G06K 7/08, H01Q 1/22

(54) **RF Tag reader and reading method**
Lesegerät und Leseverfahren für RF-Etiketten
Lecteur d'étiquettes de radiofréquence et procédé de lecture

(30) Priority: 12.09.2006 JP 2006247105
(43) Date of publication of application: 19.03.2008
(73) Proprietor: Fujitsu Ltd., Kawasaki-shi, Kanagawa 211-8588 (JP)
(72) Inventor: Maniwa, Toru c/o Fujitsu Limited, Kawasaki-shi, Kanagawa 211-8588 (JP)
(74) Representative: Wilding, Frances Ward

(56) References cited:
- US-A1- 2005 110 641
- US-A1- 2005 200 457

## Description

### BACKGROUND OF THE INVENTION

### 1. Field of the Invention

The present invention relates to wireless communications performed between RF tags and RF tag readers, and more particularly to a reader for a passive type RF tag and a method performed by the reader.

### 2. Description of the Related Art

In recent years and continuing, systems using RF tags (radio frequency tags) are attracting attention. These systems include RF tags and RF tag readers (or reader/writers). A reader/writer can read information from an RF tag and write information into an RF tag. A reader/writer is also referred to as an interrogator. An RF tag is also referred to as a wireless tag, an RFID, an RFID tag, an IC tag, an electronic tag, etc.

RF tags are generally categorized into active types and passive types. An active type RF tag is capable of generating power by itself, and therefore, the configuration of the RF tag reader can be simplified. A passive type RF tag cannot generate power by itself, and therefore, it receives energy from outside to perform operations such as sending ID information. The passive type RF tag is preferable in terms of reducing cost, and holds great potential for the future.

There are two types of RF tags from the viewpoint of frequency bandwidths of signals exchanged : an electromagnetic coupling type and an electromagnetic wave type. The electromagnetic coupling type uses frequency bandwidths of a few kHz or around 13.5 MHz. The electromagnetic wave type uses a UHF band (e.g., 950 MHz) or a high frequency bandwidth of around 2.45 GHz. In terms of increasing the communication range, signals of high frequencies are preferably used.

In a system employing RF tags, some kind of data such as identification information (UID) are read and written through RF tags to manage products, cargo, etc.

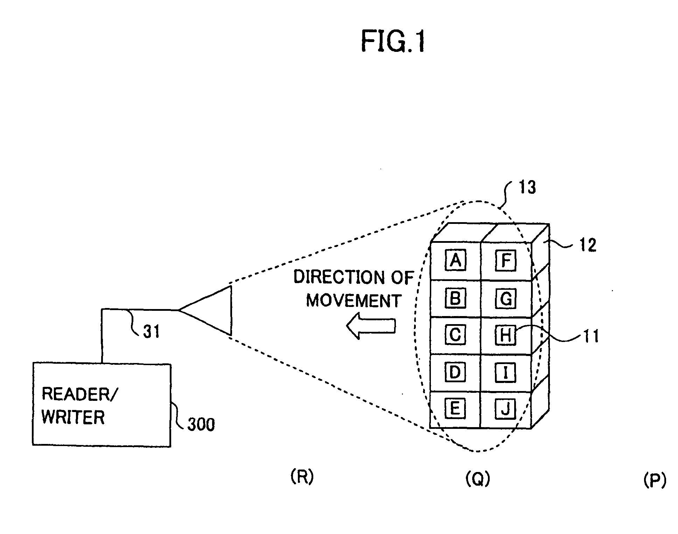

FIG. 1 schematically illustrates how packages 12 that have RF tags 11 attached are managed together with the RF tags 11. Each package 12 has attached an RF tag 11 denoted by A, B, .... J. These packages 12 are loaded on a not shown cart, and are moved through points (P), (Q), and (R). The packages 12 can be moved manually or mechanically. A reader/writer 300 communicates with all of the RF tags 11 at point (Q), and extracts information from the RF tags 11. At point (Q), the reader/writer 300 (RF tag reader) radiates electric waves that are higher than or equal to a predetermined level. RF tags 11 that are within an area 13 (reading area) receive the transmitted electric waves and acquire power. Each RF tag 11 wirelessly transmits information held therein to the reader/writer 300. In FIG. 1, the area 13 (reading area) is indicated by an oval with dashed lines. When communications between the RF tags 11 and the RF tag reader are completed at point (Q), the packages 12 are moved to point (R), and similar procedures are continued. In this manner, information in the RF tags 11 attached to the packages 12 is automatically extracted by the reader/writer 300, and management operations are carried out appropriately.

Regarding the spatial intensity distribution of electric waves radiated by the reader/writer 300, the electric waves do not necessarily become weak as the distance from the reader/writer 300 becomes longer in the actual environment. This is because the electric waves may be reflected in various manners depending on the shape or materials of an indoor room or walls. As a result, unintended areas enabling the RF tags 11 to transmit information may be created, other than the predetermined "reading area".

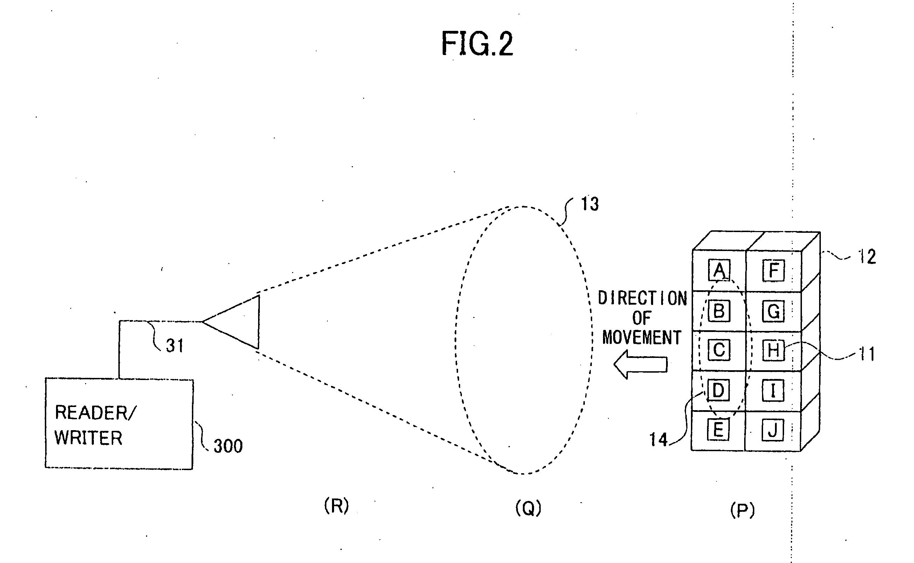

FIG. 2 illustrates such an "unintended reading area" 14 (like a hot spot) other than the intended reading area 13. The intended reading area 13 is planned in the system design, and is indicated by a large oval at point (Q), similar to the case in FIG. 1. The unintended reading area 14 is not planned in the system design, and is indicated by a small oval at point (P). The RF tags 11 can perform wireless transmission in both of these ovals.

As shown in FIG. 2, at point (P) (unintended reading area 14), communications are enabled for the RF tags B, C, and D, so they report their information to the reader/writer 300. The other RF tags cannot perform communications in the status illustrated in FIG. 2. Subsequently, these packages 12 are moved to the point (Q), where all of the RF tags 11 can perform the intended communications with the reader/writer 300. At this point, the RF tags B, C, and D will have already reported their information. If power is continuously supplied to the RF tags B, C, and D while the packages 12 are moved from point (P) to point (Q), the RF tags B, C, and D would maintain in memo that they have already transmitted their reports, so they would not redundantly transmit their information even when they reach the point (Q). However, the RF tags B, C, and D do not receive sufficient electric waves from the reader/writer 300 while the packages 12 are moved from point (P) to point (Q). Therefore, the RF tags B, C, and D do not maintain in memory that they have already transmitted their reports at point (P), and report their information to the reader/writer 300 at point (P) again. As a result, information processing relevant to the RF tags B, C, and D (processing between these RF tags and the reader/writer 300) is performed redundantly, which may lead to to excessive time and effort spent on the processing. This slows down the operation of managing the management objects.

Even if the RF tags B, C, and D do not redundantly transmit reports to the reader/writer 300 while the packages 12 are moved from point (P) to point (Q) shown in FIG. 2, a problem still remains. The unintended reading area 14 at point (P) is too small for checking all of the packages 12 (as shown by a small oval in FIG. 2). Thus, information of some of the packages 12 is reported to the reader/writer 300 at point (P), and information of the remaining packages 12 is reported to the reader/writer 300 at point (Q). The information of all of the packages 12 is collected only after communications are completed at point (Q). This means that longer processing time is required while moving from point (P) to point (Q) compared to the case of collecting the information of all of the RF tags at once. This is also a factor that slows down the operation of managing the management objects.

In Patent Document 1 discloses a technology for addressing the following problem. That is, in an environment where the electric waves of the frequency used as carrier waves are weak, it is difficult to perform communications with RF tags, which decreases the data a communications speed. Accordingly, with this technology, the data communications speed is increased by enhancing the frequency of carrier waves in such an environment.

However, even if the frequency of carrier waves is enhanced according to the communications conditions, the problem that unintended reading areas are created remains unsolved. Furthermore, in order to change carrier waves, some kind of mechanism needs to be added not only to the reader/writer but also to the RF tags, which may be difficult to realize.

Patent Document 1: Japanese Laid-Open Patent Application No. 2005-209002

US 2005/110641 discloses an RFID tag reading system, comprising an antenna system associated with a portal through which said RFID tag may pass, said antenna system comprising: a plurality of non-uniformly spaced antenna elements arranged substantially linearly; a power divider for dividing transmit power thereby coupling signals to said plurality of antenna elements; and a beam forming network capable of phase shifting the signals between the power divider and the plurality of antenna elements such that radiated signals from each antenna element add coherently such that the radiated electromagnetic energy is focused at a focal point in the near field region or in the Fresnel region of said antenna system.

US 2005/200457 discloses an inventory transport device having a fixed section and a movable section. The apparatus comprises a RFID reader device mounted on the movable section; and a RFID power device mounted on the fixed section. The RFID power device provides power to the RFID reader device without physical contact.

### SUMMARY OF THE INVENTION

The present invention provides an RF tag reader and method in which one or more of the above-described disadvantages are eliminated.

A preferred embodiment of the present invention provides an RF tag reader and method in which communications are appropriately performed with an RF tag accompanying a management object.

An embodiment of the present invention provides an RF tag reader including a main antenna with directivity covering a first area; a sub antenna with directivity covering a second area that is smaller than the first area; and a switch control unit configured to selectively switch between the main antenna and the sub antenna; wherein in response to receiving an answer signal via the sub antenna from a wireless communications unit moving together with one or more management objects, the switch control unit switches an antenna used for communications from the sub antenna to the main antenna and the RF tag reader performs communications, via the main antenna, with an RF tag each accompanying one of the management objects.

An embodiment of the present invention provides a method of communicating performed by an RF tag reader including a main antenna with directivity covering a first area; a sub antenna with directivity covering a second area that is smaller than the first area; and a switch control unit configured to selectively switch between the main antenna and the sub antenna; the method including the steps of receiving an answer signal via the sub antenna from a wireless communications unit moving together with one or more management objects; switching an antenna used for communications from the sub antenna to the main antenna in response to the receipt of an answer signal via the sub antenna; and performing communications, via the main antenna, with an RF tag accompanying one of the management objects.

According to one embodiment of the present invention, an RF tag reader can appropriately perform communications with an RF tag accompanying a management object.

### BRIEF DESCRIPTION OF THE DRAWINGS

Other objects, features and advantages of the present invention will become more apparent from the following detailed description when read in conjunction with the accompanying drawings, in which:
FIG. 1 schematically illustrates how a reader/writer performs communications with RF tags attached to packages;
FIG. 2 illustrates an unintended reading area;
FIG. 3 illustrates a system including a reader/writer according to an embodiment of the present invention;
FIG. 4 is a partial functional block diagram of the reader/writer;
FIG. 5 is a flowchart of a procedure performed by the reader/writer according to an embodiment of the present invention;
FIG. 6 illustrates a system including a reader/writer according to an embodiment of the present invention;
FIG. 7 illustrates how a low-gain antenna is used as a sub antenna;
FIG. 8 illustrates a system including a reader/writer according to another embodiment of the present invention ;
FIG. 9 illustrates a system employing linearly polarized waves;
FIG. 10 illustrates a system employing circularly polarized waves;
FIG. 11 illustrates an example in which an array antenna is used as the sub antenna; and
FIG. 12 illustrates simulation results of in-horizontal plane directivities of the sub antenna comprising an array antenna and a main antenna.

### DETAILED DESCRIPTION OF THE PREFERRED EMBODIMENTS

A description is given, with reference to the accompanying drawings, of an embodiment of the present invention.

According to an embodiment of the present embodiment, an RF tag reader is provided with a sub antenna that covers a narrower area than the main antenna. In response to receiving an answer signal via the sub antenna from a wireless communications unit moving together with management objects such as packages, the antenna used for communications is switched from the sub antenna to the main antenna. Thereafter, the RF tag reader performs communications via the main antenna with RF tags accompanying the management objects.

By employing the sub antenna covering the narrow area, unintended reading areas are prevented from being created (or even if unintended reading areas are created, they can be disregarded). Therefore, packages can be accurately detected by employing such a sub antenna. The RF tag reader is triggered to start performing communications with the main antenna as the packages reach the intended reading area. Accordingly, it is possible to efficiently prevent the main antenna from performing unintended communications with the RF tags before the packages reach the intended reading area, and the operation of managing the packages can be implemented smoothly.

It is only necessary to provide the RF tag reader with the sub antenna and a mechanism for switching between the antennas; it is not necessary to change the RF tag or any other element in the system. Accordingly, the present invention can be easily implemented in an actual system.

The antenna gain of the sub antenna is preferably lower than the antenna gain of the main antenna. For example, the main antenna can be a planar patch antenna and the sub antenna can be a dipole antenna. This is advantageous in terms of reducing the size and cost or the RF tag reader.

The sub antenna can include an attenuator for reducing the antenna gain. Accordingly, a low-gain antenna with relatively narrow directivity can be easily realized.

Each of the main antenna and the sub antenna can include a mechanism for adjusting its antenna gain. Accordingly, the main antenna and the sub antenna can be treated equally except for the antenna gains. This largely enhances the degree of freedom in designing the RF tag reader.

The wireless communications unit that communicates with the RF tag reader via the sub antenna can be one of the RF tags accompanying the packages or an RF tag that is not any of the RF tags accompanying the management objects. In the former case, it is possible to detect one of the packages with an RF tag attached (detect that the packages have reached the reading area), and therefore, the present invention can be introduced without changing any elements other than the RF tag reader. In the latter case, the wireless communications unit can be attached to a carrying unit that carries the management objects. Thus, it is ensured that the packages can be detected no matter how the packages are stacked. In the former case, in order to collect information from all of the RF tags attached to the packages, it takes the time required for the sub antenna to detect one of the packages and the time required for the main antenna to subsequently complete all communications. However, in the latter case, the information can be collected from all of the RF tags only while the main antenna performs communications. Accordingly, the latter case is more preferable in terms of collecting information from multiple RF tags and prompting information processing regarding package management within a short period of time.

The main antenna and the sub antenna can use electric waves of different polarization properties. This also ensures that the packages can be detected no matter how the packages are stacked. Linearly polarized waves having different polarization planes or circularly polarized waves having different rotational directions can be used as the electric waves of different polarization properties.

The sub antenna can be an array antenna including plural antenna elements. This is advantageous in terms of variably adjusting the directivity of the sub antenna. Merely by reducing the gain, the directivity patterns of the sub antenna and the main antenna may have similar figures. However, with the array antenna, it is possible to realize directivity that does not have a similar figure as that of the main antenna. For example, a sub antenna having a different directivity direction to that of the main antenna can be realized. This is particularly advantageous when the RF tags attached to packages and an RF tag attached to a carrier are arranged in considerably different directions.

As a matter of convenience, several embodiments of the present invention are described below. However, it is not essential to the present invention that the embodiments be separate; two or more embodiments can be employed according to need.

### <First Embodiment>

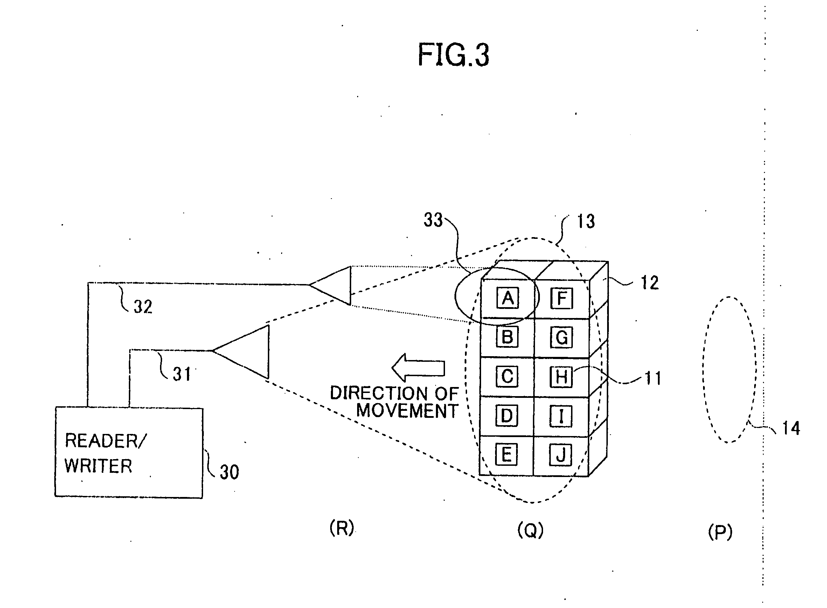

FIG. 3 illustrates communications performed between an RF tag reader according to a first embodiment of the present invention and RF tags. In the first embodiment, a reader/writer (RF tag reader) 30 includes a main antenna 31 having directivity that covers a first area 13, a sub antenna 32 having directivity that covers a second area 33 that is smaller than the first area 13, and a switch control unit that selectively switches between the main antenna 31 and the sub antenna 32. In the first embodiment, the second area 33 overlaps the first area 13.

In the event that the reader/writer 30 receives an answer signal via the sub antenna 32 from a wireless communications unit (an RF tag 11 indicated by "A" moving together with at least one package 12 (management object), the antenna used for communications is switched from the sub antenna 32 to the main antenna 31. Thereafter, communications are performed via the main antenna 31 with multiple RF tags 11 (RF tags B - J) accompanying the packages 12. If an answer signal is not received via the sub antenna 32, communications are not performed via the main antenna 31. Accordingly, even if all or part of the packages enter an unintended reading area 14, the reader/writer 30 does not immediately start communicating; the reader/writer 30 does not start communicating until the sub antenna 32 detects an answer signal. Thus, it is possible to at least alleviate the problem of redundantly reading information of the same RF tag.

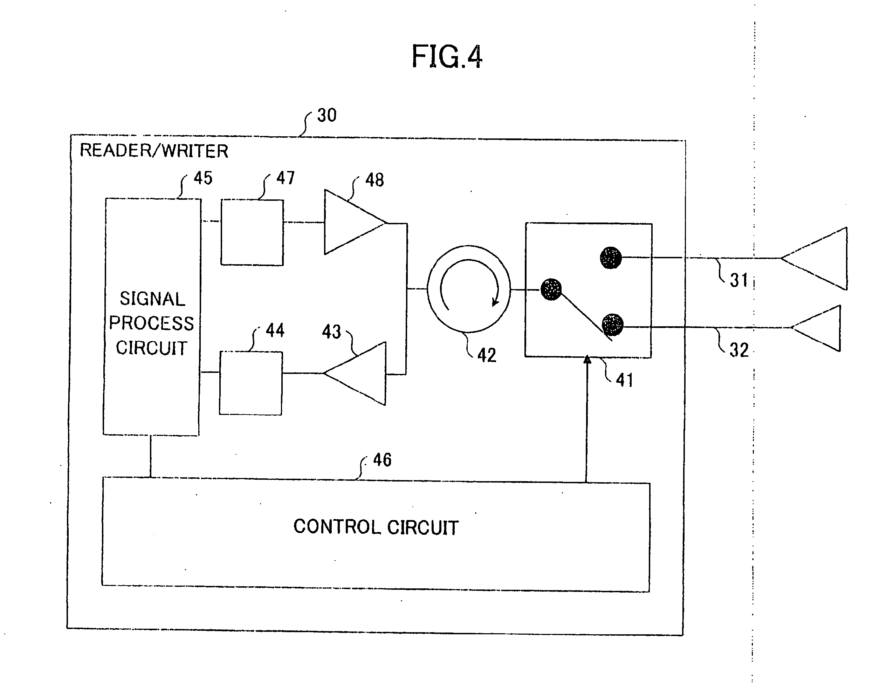

FIG. 4 is a partial functional block diagram of the reader/writer 30. FIG. 4 illustrates the main antenna 31, the sub antenna 32, a switch 41, a circulator 42, a receiver 43, a demodulator 44, a signal process circuit 45, a control circuit 46, a modulator 47, and a transmitter 48.

The main antenna 31 has directivity that covers the first area 13. The sub antenna 32 has directivity that covers the second area 33 that is smaller than the first area 13. For example, the second area 33 can be one quarter the size of the first area 13.

The switch 41 selectively switches between the main antenna 31 and the sub antenna 32 according to instructions from the control circuit 46.

The circulator 42 appropriately separates transmission signals from reception signals.

The receiver 43 adjusts the power, the bandwidth, the phase, etc., of reception signals, and converts the reception signals into signals that can be easily processed within the baseband.

The demodulator 44 demodulates the data of reception signals.

The signal process circuit 45 performs various signal processes sunder the control of the control circuit 46.

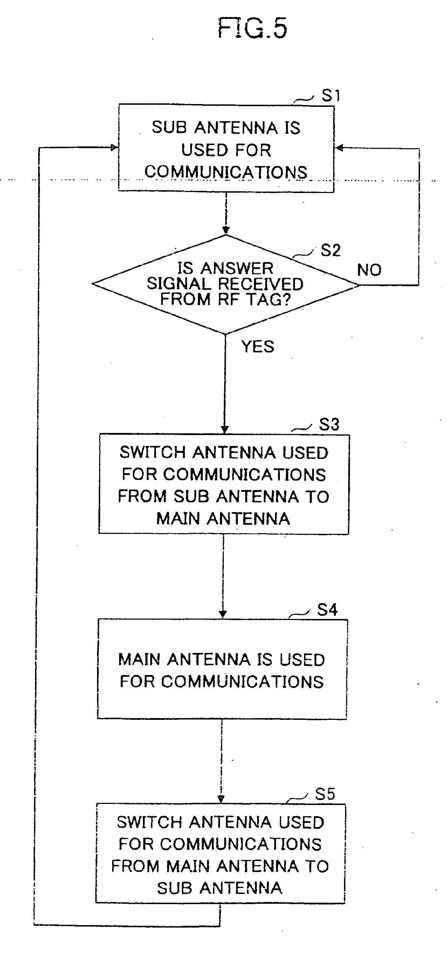

The control circuit 46 controls operations of the elements in the reader/writer 30. In particular, the control circuit 46 sends control signals to the switch 41 for switching the antenna to be used for communications in the procedure shown in FIG. 5.

The modulator 47 modulates the data of transmission signals.

The transmitter 48 adjusts the power, the bandwidth, the phase, etc., of transmission signals, and converts the transmission signals into signals that can be easily transmitted wirelessly.

FIG. 5 illustrates a method performed by the reader/writer 30 (particularly, the control circuit 46) according to the first embodiment of the present invention. In step S1, the switch 41 of the reader/writer 30 is in a status where the sub antenna 32 is used for communications. The reader/writer 30 radiates electric waves to the second area 33 via the sub antenna 32. When the RF tags 11 receive these electric waves, the electric waves can be converted into power.

In step S2, the reader/writer 30 confirms whether an answer signal from the RF tag 11 has been received. More specifically, in the status illustrated in FIG. 3, as the RF tag 11 indicated by "A" enters the second area 33, the RF tag 11 rectifies a received electric wave, converts it into power, and transmits product information and other information already held in the RF tag 11 to the reader/writer 30 as an answer signal. When an answer signal is received in step S2, the flow proceeds to step S3; if an answer signal is not received in step S₂, the flow pauses at step S2 until an answer signal is confirmed.

In step S3, the answer signal from the RF tag 11 in the second area 33 is received, and the answer signal is processed or loaded according to need. The control circuit 46 sends a control signal to the switch 41 to change the antenna used for communications from the sub antenna 32 to the main antenna 31.

In step S4, communications are performed between the main antenna 31 and the RF tags 11. That is, electric waves are radiated from the main antenna 31. The RF tags B - J receive the electric waves and transmit their information to the reader/writer 30 as answer signals. The RF tag A has already reported its information and appropriately receives power while the antenna is being switched. Therefore, the RF tag A is prevented from redundantly transmitting its information. Any appropriate communications protocol can be employed for the reader/writer 30 to sequentially acquire appropriate information from each of the RF tags 11.

In step S5, after communications with the RF tags 11 are completed, the control circuit 46 sends a control signal to the switch 41 to change the antenna used for communications from the main antenna 31 to the sub antenna 32. After communications with the RF tags 11 are completed, the packages 12 accompanied by the RF tags 11 are moved to another point (R). Thereafter, the flow returns to step S1 and the sub antenna 32 monitors whether a signal is received. The above-described procedure is repeated for subsequent sets of different packages (RF tags).

As described above, the sub antenna 32 has directivity covering a smaller area compared to the area covered by the main antenna 31. In the illustrated example, the sub antenna 32 has directivity covering an area of about one package. However, the directivity can be variably adjusted according to the purpose and the environment, as long as the main antenna 31 is used after detecting that the packages have come to first area (reading area) 13, and communications are not performed with an RF tag in the unintended reading area 14. If the sub antenna 32 covers too large an area, an "unintended area" of the sub antenna 32 may be created. Thus, the area covered by the sub antenna 32 is to be small enough so that an "unintended area" is not created.

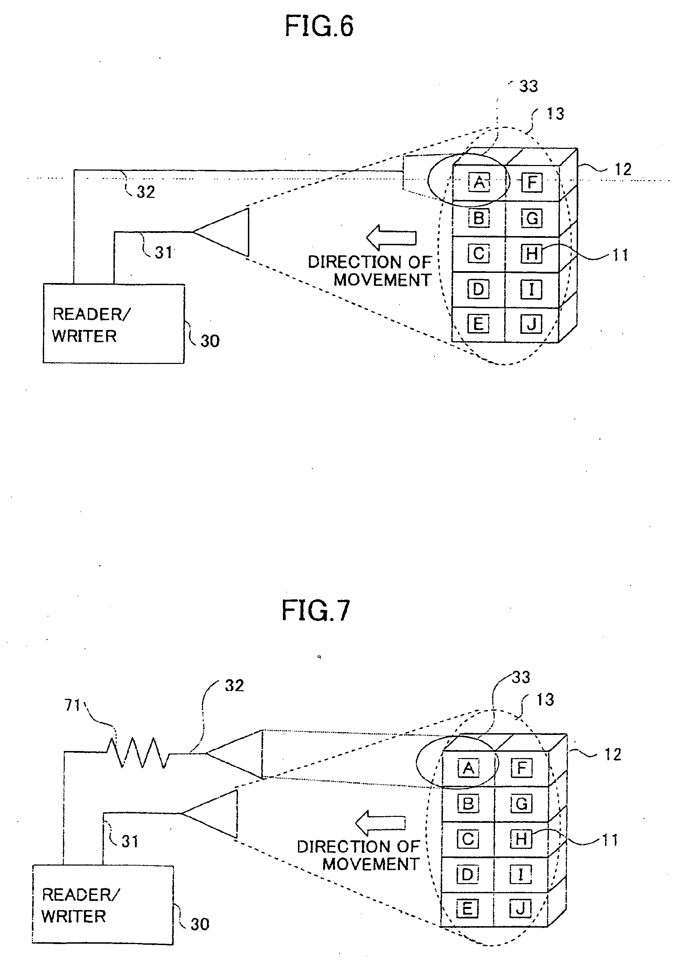

For example, the antenna gain of the sub antenna 32 can be lower than the antenna gain of the main antenna 31. For example, as shown in FIG. 6, the main antenna 31 having a high gain can be a planar patch antenna and the sub antenna 32 having a low gain can be a dipole antenna. This configuration is preferable in terms of reducing size and cost.

As shown in FIG. 7, the sub antenna 32 can include an attenuator 71 for reducing the antenna gain. Generally, a low-gain antenna has wide directivity, and therefore, it may be difficult to narrow down the directivity to a particular small area. In such a case, by providing the attenuator 71 to the sub antenna 32 with wide directivity, it is possible to realize a low-gain antenna with relatively narrow directivity. Although not illustrated in FIG. 7, each of the main antenna 31 and the sub antenna 32 can be provided with a mechanism for adjusting the antenna gain. Accordingly, the distinction between the main antenna 31 and the sub antenna 32 can be made by adjusting the antenna gain, which largely enhances the degree of freedom in designing the reader/writer 30. After using the reader/writer 30 for a certain period of time, the levels of antenna gain can be reversed so that the roles of the main antenna 31 and the sub antenna 32 are switched.

### <second Embodiment>

The sub antenna 32 is made to have directivity covering the second area 33 that is smaller than the area covered by the main antenna 31. Accordingly, in order to precisely detect that the packages 12 have arrived in the first area (reading area) 13, it is necessary to ensure that at least one of the RF tags 11 is within the smaller second area 33. For this reason, the packages 12 need to be carefully stacked on top of each other as shown in FIG. 3. Otherwise, there may be cases where the RF tag 11 indicated by "A" does not come into the second area 33 where its position is to be detected. A second embodiment according to the present invention addresses such concern.

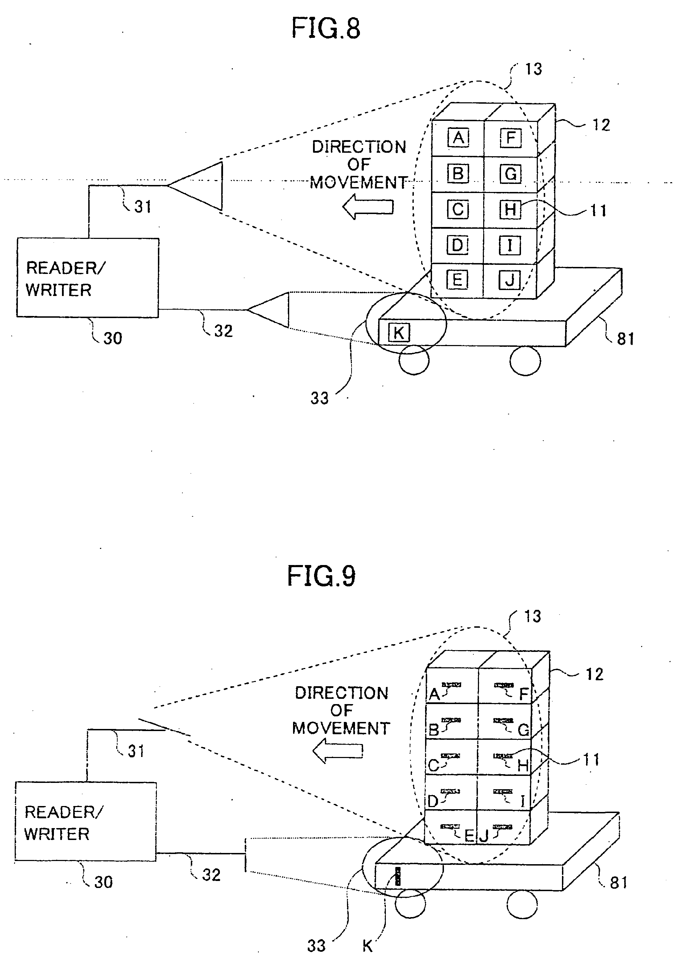

FIG. 8 illustrates communications performed between an RF tag reader according to a second embodiment of the present invention and RF tags. In the event that the reader/writer 30 receives an answer signal via the sub antenna 32 from a wireless communications unit moving together with at least one package 12 (management object), the antenna used for communications is switched from the sub antenna 32 to the main antenna 31. Thereafter, communications are performed via the main antenna 31 with multiple RF tags 11 (RF tags B - J) accompanying the packages 12 by the above described method. In the second embodiment, the wireless communications unit is the RF tag 11 indicated by "K". This wireless communications unit is not any of the RF tags 11 accompanying the packages 12. The wireless communications unit that performs communications via the sub antenna 32 is attached to a carriage (conveying unit) 81 used for carrying the packages 12. Thus, no matter how the packages 12 are stacked, the operation of detecting (positional detection) whether the packages 12 have come to the first area (reading area) 13 is unaffected. However, the packages 12 do need to be stacked in such a manner that the RF tags 11 of the packages 12 are appropriately read in the first area (reading area) 13.

FIG. 9 illustrates an example in which the main antenna 31 and the sub antenna 32 employ electric waves of different polarization properties. In the example shown in FIG. 9, linearly polarized waves having different polarization planes act as electric waves having different polarization properties. The RF tags 11 attached to the packages 12 use horizontal polarization planes and the RF tag 11 attached to the carriage 81 uses vertical polarization planes to communicate with the reader/writer 30. Accordingly, the main antenna 31 of the reader/writer 30 is for horizontal polarization planes and the sub antenna 32 of the reader/writer 30 is for vertical polarization planes. Alternatively, the main antenna 31 can be for vertical polarization planes and the sub antenna 32 can be for horizontal polarization planes. The main antenna 31 and the sub antenna 32 use electric waves of different polarization properties, thus ensuring that the carriage 81 and the packages 12 are detected separately.

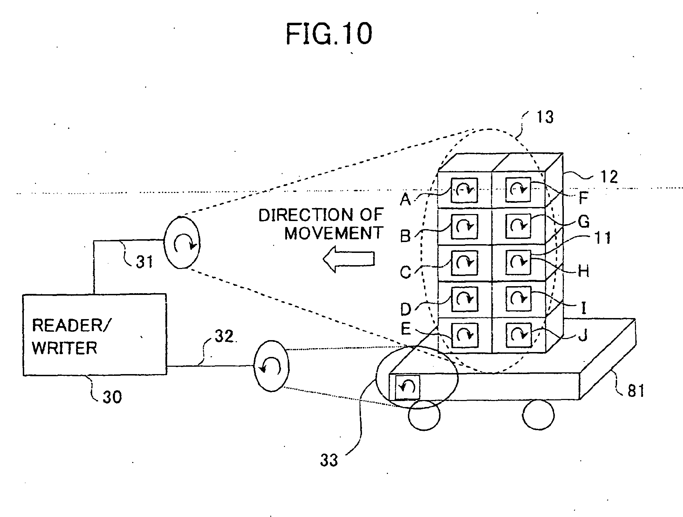

FIG. 10 illustrates another example where the main antenna 31 and the sub antenna 32 use electric waves of different polarization properties. In the example shown in FIG. 10, circularly polarized waves having different rotational directions act as electric waves having different polarization properties. The RF tags 11 attached to the packages 12 use polarized waves rotating in a clockwise direction and the RF tag 11 attached to the carriage 81 uses polarized waves rotating in a counterclockwise direction to communicate with the reader/writer 30. Accordingly, the main antenna 31 of the reader/writer 30 is for polarized waves rotating in a clockwise direction and the sub antenna 32 of the reader/writer 30 is for polarized waves rotating in a counterclockwise direction. Alternatively, the main antenna 31 can be for polarized waves rotating in a counterclockwise direction and the sub antenna 32 can be for polarized waves rotating in a clockwise direction. The main antenna 31 and the sub antenna 32 use electric waves of different polarization properties, thus ensuring that the carriage 81 and the packages 12 are separately detected. Circularly polarized waves are preferable in terms of ensuring communications with RF tags 11 even when the packages 12 are stacked irregularly or the carriage 81 is in an irregular direction.

### <Third Embodiment>

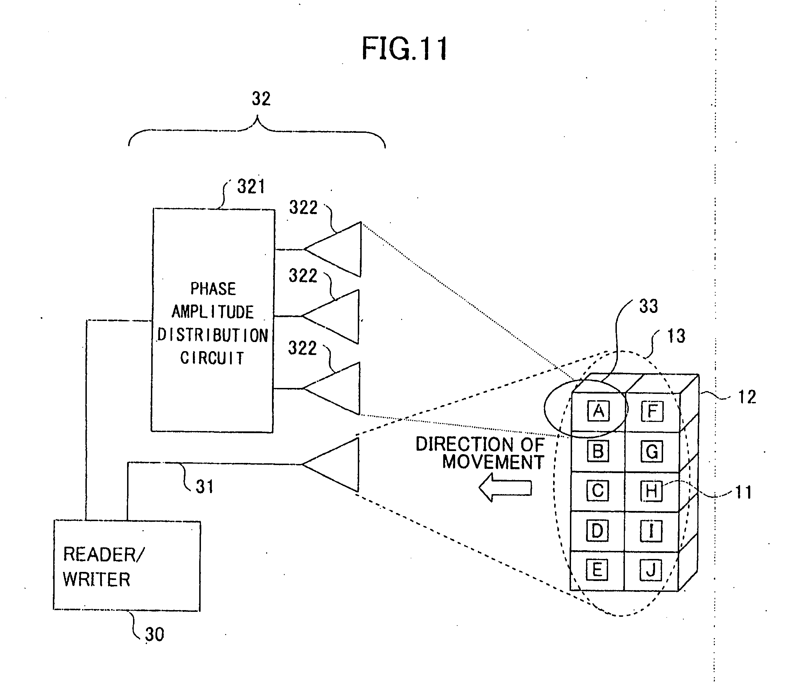

FIG. 11 illustrates an example in which the sub antenna 32 is an array antenna. In a third embodiment according to the present invention, the sub antenna 32 includes a phase amplitude distribution circuit 321 connected to plural antenna elements 322. The phase amplitude distribution circuit 321 appropriately adjusts the phases of signals transmitted through the antenna elements 322, and therefore, the sub antenna 32 can be made to have directivity that covers a smaller second area 33 compared to the area covered by the main antenna 31.

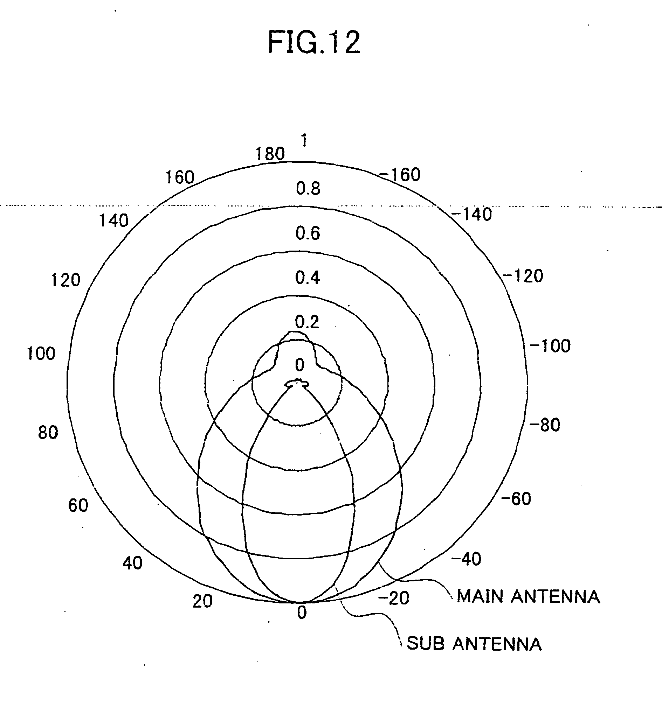

FIG. 12 illustrates simulation results of in-horizontal plane directivities of the sub antenna 32 that is an array antenna as shown in FIG. 11 and the main antenna 31. The simulation employs one main antenna 31 and the sub antenna 32 with a total of four elements arranged on the top, bottom, left, and right with half wave intervals therebetween. Results are calculated based on the condition that one quarter of the power is supplied to each of the elements. As shown in FIG. 12, the sub antenna 32 has lower gain and yet narrower directivity than the main antenna 31.

### <Fourth Embodiment>

In the system shown in FIG. 7, the reading area is adjusted by using the attenuator 71, and in the system shown in FIG. 11, the reading area is adjusted by using the phase amplitude distribution circuit 321. If the reading area can be changed by adjusting the gain and the phase, the RF tag reader does not necessarily require two antennas as described in the first - third embodiments, because the antennas are not used simultaneously. There can be a single antenna whose directivity and gain can be changed. Such an antenna would be first used to detect the packages, realizing appropriate directivity as a sub antenna. Then, after detecting the packages, the directivity and the gain are changed so that the antenna can be used as a main antenna.

The present invention is not limited to the specifically disclosed embodiments, and variations and modifications may be made without departing from the scope of the present invention as defined by the appended claims.

The present application is based on Japanese Priority Patent Application No. 2006-247105, filed on September 12, 2006.

## Claims

1. An RF tag reader comprising:
a main antenna (31) with directivity covering a first area (13);
a sub antenna (32) with directivity covering a second area (33) that is smaller than the first area (13); and
a switch control unit configured to selectively switch between the main antenna (31) and the sub antenna (32); wherein:
in response to receiving an answer signal via the sub antenna (32) from a wireless communications unit (11) moving together with one or more management objects (12), the switch control unit switches an antenna used for communications from the sub antenna (32) to the main antenna (31) and the RF tag reader performs communications, via the main antenna (31), with an RF tag (11) each accompanying one of the management objects (12).

2. The RF tag reader according to claim 1, wherein the sub antenna (32) has a lower antenna gain than that of the main antenna (31).

3. The RF tag reader according to claim 2, wherein the main antenna (31) comprises a planar patch antenna and the sub antenna (32) comprises a dipole antenna.

4. The RF tag reader according to claim 2, wherein the sub antenna (32) comprises an attenuator configured to reduce its antenna gain.

5. The RF tag reader according to claim 2, wherein each of the main antenna (31) and the sub antenna (32) comprises a mechanism configured to adjust its antenna gain.

6. The RF tag reader according to claim 1, wherein the wireless communications unit corresponds to one of plural of the RF tags (11) accompanying the one or more management objects (12).

7. The RF tag reader according to claim 1, wherein the wireless communications unit comprises another RF tag (11) that does not correspond to any of plural of the RF tags (11) accompanying the one or more management objects (12).

8. The RF tag reader according to claim 7, wherein the wireless communications unit (11) is attached to a carrying unit configured to carry the one or more management objects (12).

9. The RF tag reader according to claim 7, wherein the main antenna (31) and the sub antenna (32) use electric waves of different polarization properties.

10. The RF tag reader according to claim 9, wherein linearly polarized waves having different polarization planes are used as the electric waves of different polarization properties.

11. The RF tag reader according to claim 9, wherein circularly polarized waves having different rotational directions are used as the electric waves of different polarization properties.

12. The RF tag reader according to claim 1, wherein the sub antenna (32) comprises an array antenna comprising plural antenna elements (322).

13. A method of communicating performed by an RF tag reader comprising:
a main antenna (31) with directivity covering a first area (13);
a sub antenna (32) with directivity covering a second area (33) that is smaller than the first area; and
a switch control unit configured to selectively switch between the main antenna (31) and the sub antenna (32); the method comprising the steps of:
receiving an answer signal via the sub antenna (32) from a wireless communications unit (11) moving together with one or more management objects (12);
switching an antenna used for communications from the sub antenna (32) to the main antenna (31) in response to the receipt of an answer signal via the sub antenna (32); and
performing communications, via the main antenna (31), with an RF tag (11) accompanying one of the management objects (12).

14. The method according to claim 13, further comprising the step of switching the antenna used for communications back to the sub antenna (32) from the main antenna (31) after completing performing communications with one or more of the RF tags (11) accompanying the management objects (12).

## Patentansprüche

1. RF-Etiketten-Leser mit:
einer Hauptantcnne (31) mit Richtvermögen, die einen ersten Bereich (13) abdeckt;
einer Unterantenne (32) mit Richtvermögen, die einen zweiten Bereich (33) abdeckt, der kleiner als der erste Bereich (13) ist; und
einer Schaltsteuereinheit, die konfiguriert ist, um zwischen der Hauptantenne (31) und der Unterantenne (32) selektiv umzuschalten; bei dem:
als Reaktion auf den Empfang eines Antwortsignals über die Unterantenne (32) von einer drahtlosen Kommunikationseinheit (11), die sich zusammen mit einem oder mehreren Verwaltungsobjekten (12) bewegt, die Schaltsteuereinheit eine Antenne, die für die Kommunikation verwendet wird, von der Unterantenne (32) auf die Hauptantenne (31) umschaltet und der RF-Etiketten-Leser die Kommunikation über die Hauptantenne (31) mit einem RF-Etikett (11) ausführt, das jeweils eines der Verwaltungsobjekte (12) begleitet.

2. RF-Etiketten-Leser nach Anspruch 1, bei dem die Unterantenne (32) eine niedrigere Antennenverstärkung als die Ilauptantenne (31) hat.

3. RF-Etiketten-Leser nach Anspruch 2, bei der die Hauptantenne (31) eine planare Patch-Antenne umfasst und die Unterantenne (32) eine Dipolantenne umfasst.

4. RF-Etiketten-Leser nach Anspruch 2, bei dem die Unterantenne (32) einen Abschwächer umfasst, der konfiguriert ist, um ihre Antennenverstärkung zu reduzieren.

5. RF-Etiketten-Leser nach Anspruch 2, bei dem sowohl die Hauptantenne (31) als auch die Unterantenne (32) einen Mechanismus umfasst, der konfiguriert ist, um ihre Antennenverstärkung einzustellen.

6. RF-Etiketten-Leser nach Anspruch 1, bei dem die drahtlose Kommunikationseinheit einem von einer Vielzahl von RF-Etiketten (11) entspricht, die das eine oder die mehreren Verwaltungsobjekte (12) begleiten.

7. RF-Etiketten-Leser nach Anspruch 1, bei dem die drahtlose Kommunikationseinheit ein anderes RF-Etikett (11) umfasst, das keinem von einer Vielzahl von RF-Etiketten (11) entspricht, die das eine oder die mehreren Verwaltungsobjekte (12) begleiten.

8. RF-Etiketten-Leser nach Anspruch 7, bei dem die drahtlose Kommunikationseinheit (11) an einer Trägereinheit angebracht ist, die konfiguriert ist, um das eine oder die mehreren Verwaltungsobjekte (12) zu tragen.

9. RF-Etiketten-Leser nach Anspruch 7, bei dem die Hauptantenne (31) und die Unterantenne (32) elektrische Wellen mit verschiedenen Polarisationseigenschaften verwenden.

10. RF-Etiketten-Leser nach Anspruch 9, bei dem linear polarisierte Wellen mit verschiedenen Polarisationsebenen als elektrische Wellen mit verschiedenen Polarisationseigenschaften verwendet werden.

11. RF-Etiketten-Leser nach Anspruch 9, bei dem zirkular polarisierte Wellen mit verschiedenen Rotationsrichtungen als elektrische Wellen mit verschiedenen Polarisationseigenschaften verwendet werden.

12. RF-Etiketten-Leser nach Anspruch 1, bei dem die Unterantenne (32) eine Array-Antenne umfasst, die eine Vielzahl von Antennenelementen (322) enthält.

13. Verfahren zum Kommunizieren, das durch einen RF-Etiketten-Leser ausgeführt wird, der umfasst:
eine Hauptantenne (31) mit Richtvermögen, die einen ersten Bereich (13) abdeckt;
eine Unterantenne (32) mit Richtvermögen, die einen zweiten Bereich (33) abdeckt, der kleiner als der erste Bereich ist; und
eine Schaltsteuereinheit, die konfiguriert ist, um zwischen der Hauptantenne (31) und der Unterantenne (32) selektiv umzuschalten; welches Verfahren die Schritte umfasst:
Empfangen eines Antwortsignals über die Unterantenne (32) von einer drahtlosen Kommunikationseinheit (11), die sich zusammen mit einem oder mehreren Verwaltungsobjekten (12) bewegt;
Umschalten einer Antenne, die für die Kommunikation verwendet wird, von der Unterantenne (32) auf die Hauptantenne (31) als Reaktion auf den Empfang eines Antwortsignals über die Unterantenne (32); und
Ausführen der Kommunikation, über die Hauptantenne (31), mit einem RF-Etikett (11), das eines der Verwaltungsobjekte (12) begleitet.

14. Verfahren nach Anspruch 13, ferner mit dem Schritt zum Umschalten der Antenne, die für die Kommunikation verwendet wird, von der Hauptantenne (31) zurück auf die Unterantenne (32), nachdem das Ausführen der Kommunikation mit einem oder mehreren der RF-Etiketten (11), die die Verwaltungsobjekte (12) begleiten, vollendet ist.

## Revendications

1. Lecteur d'étiquettes RF comprenant :
une antenne principale (31) à directivité couvrant une première zone (13) ;
une sous-antenne (32) à directivité couvrant une seconde zone (33) qui est inférieure à la première zone (13) ; et
une unité de commande de commutation configurée pour alterner sélectivement entre l'antenne principale (31) et la sous-antenne (32) ; dans lequel :
en réponse à la réception d'un signal de réponse via la sous-antenne (32) en provenance d'une unité de communication sans fil (11) bougeant en même temps qu'un ou plusieurs objets de gestion (12), l'unité de commande de commutation commute une antenne utilisée pour les communications provenant de la sous-antenne (32) vers l'antenne principale (31) et le lecteur d'étiquettes RF effectue des communications, via l'antenne principale (31), une étiquette RF (11) accompagnant chacun des objets de gestion (12).

2. Lecteur d'étiquettes RF selon la revendication 1, dans lequel la sous-antenne (32) a un gain d'antenne inférieur à celui de l'antenne principale (31).

3. Lecteur d'étiquettes RF selon la revendication 2, dans lequel l'antenne principale (31) comprend une antenne-plaque plane et la sous-antenne (32) comprend une antenne dipôle.

4. Lecteur d'étiquettes RF selon la revendication 2, dans lequel la sous-antenne (32) comprend un atténuateur configuré pour réduire son gain d'antenne.

5. Lecteur d'étiquettes RF selon la revendication 2, dans lequel l'antenne principale (31) et la sous-antenne (32) comprennent chacune un mécanisme configuré pour ajuster son gain d'antenne.

6. Lecteur d'étiquettes RF selon la revendication 1, dans lequel l'unité de communication sans fil correspond à l'une des différentes étiquettes RF (11) accompagnant le ou les objets de gestion (12).

7. Lecteur d'étiquettes RF selon la revendication 1, dans lequel l'unité de communication sans fil comprend une autre étiquette RF (11) qui ne correspond à aucune des étiquettes RF (11) accompagnant le ou les objets de gestion (12).

8. Lecteur d'étiquettes RF selon la revendication 7, dans lequel l'unité de communication sans fil (11) est fixée à une unité porteuse configurée pour porter le ou les objets de gestion (12).

9. Lecteur d'étiquettes RF selon la revendication 7, dans lequel l'antenne principale (31) et la sous-antenne (32) utilisent des ondes électriques de propriétés de polarisation différentes.

10. Lecteur d'étiquettes RF selon la revendication 9, dans lequel des ondes linéairement polarisées ayant des plans de polarisation différents sont utilisées comme ondes électriques de propriétés de polarisation différentes.

11. Lecteur d'étiquettes RF selon la revendication 9, dans lequel des ondes circulairement polarisées ayant des directions de rotation différentes sont utilisées comme ondes électriques de propriétés de polarisation différentes.

12. Lecteur d'étiquettes RF selon la revendication 1, dans lequel la sous-antenne (32) comprend une antenne réseau comprenant plusieurs éléments d'antenne (322).

13. Procédé de communication effectué par un lecteur d'étiquettes RF comprenant :
une antenne principale (31) à directivité couvrant une première zone (13) ;
une sous-antenne (32) à directivité couvrant une seconde zone (33) qui est inférieure à la première zone ; et
une unité de commande de commutation configurée pour alterner sélectivement entre l'antenne principale (31) et la sous-antenne (32) ; le procédé comprenant les étapes consistant à :
recevoir un signal de réponse via la sous-antenne (32) en provenance d'une unité de communication sans fil (11) bougeant en même temps qu'un ou plusieurs objets de gestion (12) ;
commuter une antenne utilisée pour les communications provenant de la sous-antenne (32) vers l'antenne principale (31) en réponse à la réception d'un signal de réponse via la sous-antenne (32) ; et
effectuer des communications, via l'antenne principale (31), une étiquette RF (11) accompagnant l'un des objets de gestion (12).

14. Procédé selon la revendication 13, comprenant en outre l'étape consistant à commuter l'antenne utilisée pour les communications renvoyées vers la sous-antenne (32) depuis l'antenne principale (31) à la fin de la réalisation des communications avec une ou plusieurs des étiquettes RF (11) accompagnant les objets de gestion (12).
